# EUROPÄISCHE PATENTSCHRIFT

(11) **EP 3 656 523 B1**
(45) Veröffentlichungstag und Bekanntmachung des Hinweises auf die Patenterteilung: **29.09.2021**
(21) Anmeldenummer: 18207797.4
(22) Anmeldetag: 22.11.2018
(51) Int. Cl.: B29B 7/60, B29B 7/42, B29C 48/50, B29C 48/285, B29C 48/45, B29C 48/395

(54) **MISCH- UND KNETMASCHINE MIT WIRKSAMER ENTLÜFTUNG IM BEREICH DER ZUFÜHRUNG, UND DARAUF BEZOGENES VERFAHREN**
MIXING AND KNEADING MACHINE WITH EFFICIENT VENTING IN THE AREA OF THE FEED-IN, AND RELATED METHOD
MÉLANGEUR-MALAXEUR À VENTILATION EFFICACE DANS LA ZONE D'ALIMENTATION, ET PROCÉDÉ ASSOCIÉ

(43) Veröffentlichungstag der Anmeldung: 27.05.2020
(73) Patentinhaber: Buss AG, 4133 Pratteln (CH)
(72) Erfinder: WALTER, Wolfgang, 73434 Aalen (DE)
(74) Vertreter: Henkel & Partner mbB

(56) Entgegenhaltungen:
- EP-B1- 0 983 133
- EP-B1- 1 175 293
- WO-A1-2011/014902
- WO-A1-2014/056010
- WO-A2-2007/054084
- CH-A- 278 575
- CH-A- 464 656
- CH-A5- 695 934
- US-A1- 2008 277 052

## Beschreibung

Die vorliegende Erfindung betrifft eine Misch- und Knetmaschine für kontinuierliche Aufbereitungsprozesse, wie zur Herstellung von Granulat, Strangpressprofilen oder Formteilen, sowie ein Verfahren zum Mischen und Kneten eines Ausgangsmaterials unter Verwendung einer solchen Misch- und Knetmaschine.

Derartige Misch- und Knetmaschinen werden insbesondere zum Aufbereiten von plastischen und/oder pastösen Massen eingesetzt. Das Arbeitsorgan einer derartigen Misch- und Knetmaschine bildet eine darin angeordnete Schneckenwelle, welche das zu verarbeitende Material in axialer Richtung vorwärts transportiert bzw. fördert und dabei die Komponenten des Materials miteinander vermischt. Beispielsweise werden derartige Misch- und Knetmaschinen zum Verarbeiten von zähplastischen Massen, zum Homogenisieren und Plastifizieren von Kunststoffen, zum Einarbeiten von Füll- und Verstärkungsstoffen sowie zum Herstellen von Ausgangsmaterialien für die Lebensmittelindustrie eingesetzt. Sehr häufig liegt das Ausgangsmaterial bzw. mindestens ein Bestandteil des Ausgangsmaterials als partikuläres Material, wie beispielsweise als Pulver oder Granulat, vor. Diese Misch- und Knetmaschinen können beispielsweise so betrieben werden, dass zunächst aus dem Ausgangsmaterial eine Schmelze erzeugt wird, bevor die so erzeugte Schmelze durch die Schneckenwelle in axialer Richtung durch die Misch- und Knetmaschine gefördert und dabei homogenisiert wird. In Abhängigkeit von dem zu mischenden Material kann die in der Misch- und Knetmaschine eingestellte Temperatur zumindest abschnittsweise zwischen 50° und 400°C betragen. Derartige Misch- und Knetmaschinen eignen sich insbesondere auch zum Herstellen von Polymergranulat, Polymerstrangpressprofilen, Polymerformteilen und dergleichen, wenn am stromabwärtigen Ende der Maschine eine geeignete Austragsvorrichtung, wie beispielsweise ein Austragsextruder, angeordnet wird und mit einer Granulationsvorrichtung oder einer ähnlichen Vorrichtung, wie mit einer intermittierenden Schneidvorrichtung, Strangdüse, Profilwerkzeug, Plattendüse oder einer ähnlichen Vorrichtung verbunden wird.

Solche Misch- und Knetmaschinen sind beispielsweise aus der CH 278 575 A sowie aus der CH 464 656 bekannt. Bei diesen Misch- und Knetmaschinen führt die Schneckenwelle vorzugsweise nicht nur eine rotative Bewegung aus, sondern bewegt sich gleichzeitig auch in der axialen Richtung, d.h. in der Richtung der Schneckenwelle, translatorisch vor und zurück. Der Bewegungsablauf zeichnet sich daher vorzugsweise dadurch aus, dass die Schneckenwelle in der axialen Richtung gesehen eine der Rotation überlagerte oszillatorische Bewegung ausführt. Dieser Bewegungsablauf ermöglicht das Einbringen von Einbauten, nämlich von Knetelementen, wie von Knetbolzen oder von Knetzähnen, in das Gehäuse der Eintrags- und Mischvorrichtung. Wegen des Vorhandenseins der Knetbolzen oder der Knetzähne verläuft die auf der Hauptwelle, dem sogenannten Wellenstab, angeordnete Schnecke nicht - im Querschnitt des Wellenstabs gesehen - durchgehend, sondern ist in eine Mehrzahl von einzelnen Flügelelementen unterteilt, die sich jeweils über einen bestimmten Winkelabschnitt des Querschnittsumfangs des Wellenstabes erstrecken. Benachbarte Flügelelemente sind voneinander sowohl in axialer Richtung als auch in der Außenumfangsrichtung des Wellenstabes beabstandet, d.h. zwischen benachbarten Flügelelementen ist sowohl in axialer Richtung als auch in der Außenumfangsrichtung des Wellenstabes jeweils ein Spalt vorgesehen. Wenn beispielsweise der gesamte Wellenstab der Schneckenwelle oder ein axialer Abschnitt des Wellenstabs der Schneckenwelle, bezogen auf den Querschnittsumfang, drei Flügelelemente umfasst, welche sich jeweils über einen Winkelabschnitt von zum Beispiel 100° des Querschnittsumfangs des Wellenstabs erstrecken spricht man von einer dreiflügligen Schneckenwelle bzw. einem dreiflügligen Schneckenwellenabschnitt. Die Rotation und die translatorische Bewegung der Schneckenwelle in axialer Richtung werden so gesteuert, dass die einzelnen Flügelelemente mit ihren Flanken in die Nähe der entsprechenden Knetelemente gelangen, um das zu mischende und knetende Material zu verdichten und eine Scherwirkung auf dieses auszuüben, um so den Mischungs- und/oder Knetvorgang zu befördern, ohne dass die Knetelemente mit den Flügelelementen kollidieren. Abgesehen davon kommen die Knetelemente den Flanken der Flügelelemente so nahe, dass die Knetelemente Ablagerungen von Komponenten der Mischung auf den Flanken der Flügelelemente verhindert, so dass die Knetelemente im Ergebnis auch eine Reinigung der Flügelelemente bewirken. Natürlich muss die Anzahl und die Geometrie der Flügelelemente an die Anzahl der Knetelemente angepasst sein.

In der EP 0 983 133 B1 wird eine Vorrichtung zum gravimetrischen Mischen mehrere Substanzen beschrieben, welche eine Mischschneckenwelle und einen Einfülltrichter aufweist, wobei der Einfülltrichter eine vertikale Trennwand aufweist. Diese soll den in mehrere Kompartimente unterteilen, so dass über den Einfülltrichter mehrere verschiedene Feststoffe eingefüllt werden können. Ergänzend wird noch auf die WO 2011/014902 A1 verwiesen, die das Vermeiden von Lufteinbringung über den Einfülltrichter beschreibt. Dabei wird ein durch eine Trennwand in mehrere Kompartimente unterteilter Einfülltrichter gezeigt, wobei durch die Kompartimente Polymerpartikel verschiedener Grösse und Qualität eingefüllt werden können. Zur Entlastung der Dichtung werden Alternativlösungen beschrieben wie beispielsweise das Vorsehen einer Schnecke oder eines Impulsgenerators.

Eine Herausforderung bei diesen Misch- und Knetmaschinen ist die Abdichtung der sich drehenden und oszillatorisch hin- und herbewegenden Schneckenwelle zu dem damit verbunden Getriebeflansch, über den die Schneckenwelle mit dem Getriebe verbunden ist. Eine solche Abdichtung ist insbesondere wichtig, um den Austritt von partikulärem Material, wie insbesondere Pulver und feinteiligem Granulat, von dem Prozessraum der Misch- und Knetmaschine in den daran angeschlossenen Getriebeflansch oder gar in das Getriebe zu vermeiden. Bei der Zuführung von partikulärem Material beispielsweise durch einen Einfülltrichter wird automatisch Luft mit in den Prozessraum der Misch- und Knetmaschine eingebracht, weil die Schüttdichte von solchem partikulärem Material häufig bei 0,5 bis 0,7 g/cm³ und bei einigen Ausgangsmaterialien sogar noch darunter liegt. Diese über den Einfülltrichter mit dem eingeführten partikulären Ausgangsmaterial eingebrachte Luft muss vorzugsweise durch den Einfülltrichter wieder aus dem Prozessraum der Misch- und Knetmaschine entweichen können, weil die Dichtung zwischen der Tragwelle der Schneckenwelle, der diese umgebenden Gehäusewand und dem Getriebeflansch luftdicht ausgelegt ist. Ein Entweichen der Luft aus dem Prozessraum durch den Einfülltrichter funktioniert jedoch in der Praxis nicht oder zumindest nicht zuverlässig, und zwar insbesondere dann nicht, wenn die Einfüllöffnung mit einem Materialpolster bedeckt ist. Die Axialbewegung der Schnecke drückt die Luft bei dem Rückwärtshub gegen die Dichtung. Sobald die Vorspannung der Dichtung nachlässt, entweicht die Luft durch den entstandenen Spalt zwischen der Tragwelle, der diese umgebenden Gehäusewand und dem Getriebeflansch und diese Luft reißt Pulver- bzw. feine Granulatpartikel mit, welche sich dann im Getriebeflansch ansammeln und dann die Wellendichtringe der Abtriebswelle zerstören und/oder sogar in das Getriebe eindringen, wodurch das Lager und andere Getriebeteile zerstört werden können. Ein anderer Teil des partikelförmigen Ausgangsmaterials sammelt sich dann auf dem Maschinengestell an und wird bei jeder Luftbewegung aufgewirbelt. Häufig werden zum Zweck der Abdichtung der Tragwelle Stopfbuchsen eingesetzt. Allerdings vermeiden diese nur für eine vergleichsweise kurze Betriebsdauer von typischerweise etwa 2 Wochen das Eindringen von Luft und mitgerissen Partikeln in den Getriebeflansch . Entsprechend häufig müssen die Stopfbuchsen derartiger Misch- und Knetmaschinen ausgetauscht werden.

Ausgehend davon liegt die Aufgabe der vorliegenden Erfindung darin, eine derartige Misch- und Knetmaschine bereitzustellen, bei deren Betrieb die zwischen der Tragwelle, der diese umgebenden Gehäusewand und dem Getriebeflansch angeordnete Dichtung, insbesondere Stopfbuchse, entlastet wird, so dass deren Betriebsdauer bzw. die Zeitspanne, während der diese den Verbindungsbereich zwischen der Tragwelle und dem Getriebeflansch luftdicht hält bzw. ein Eindringen von Luft und partikulärem Material von dem Prozessraum der Misch- und Knetmaschine in den Getriebeflansch zuverlässig verhindert, verlängert wird.

Erfindungsgemäß wird diese Aufgabe gelöst durch eine Misch- und Knetmaschine gemäss Anspruch 1 für kontinuierliche Aufbereitungsprozesse, wie zum Kneten und Mischen von partikulärem Ausgangsmaterial und/oder zur Herstellung von Granulat, Strangpressprofilen oder Formteilen, mit einem Gehäuse, in welchem ein von der Innenumfangsfläche des Gehäuses begrenzter und in der Längsrichtung der Misch- und Knetmaschine verlaufender hohler Innenraum ausgebildet ist, mit einer sich zumindest abschnittsweise in axialer Richtung durch den Innenraum des Gehäuses erstreckenden Schneckenwelle, die im Betrieb in dem (vorzugsweise zylindrischem) Innenraum des Gehäuses rotiert und sich gleichzeitig in der axialen Richtung translatorisch hin- und her bewegt, mit einem Antrieb, welcher die Schneckenwelle im Betrieb rotiert, und mit einer an dem Gehäuse angeordneten Einfüllvorrichtung zum Zuführen mindestens eines zu mischenden und knetenden Ausgangsmaterials in den Innenraum des Gehäuses, wobei sich die Einfüllvorrichtung durch eine sich durch die Gehäusewand hindurch erstreckende Aussparung erstreckt oder mit einer sich durch die Gehäusewand hindurch erstreckenden Aussparung verbunden ist, dadurch gekennzeichnet, dass die Einfüllvorrichtung mindestens zwei sich jeweils über die Höhe der Einfüllvorrichtung erstreckende Hohlräume umfasst, die voneinander durch mindestens eine Trennwand getrennt sind, und dass i) zwischen dem Getriebeflansch und dem damit verbundenen stromaufwärtigen Ende des Gehäuses und/oder ii) in dem stromaufwärtigen Ende des Gehäuses eine die Schneckenwelle gegenüber der Innenumfangsfläche des Gehäuses abdichtende Dichtung vorgesehen ist, und in dem Gehäuse mindestens ein sich von der Innenumfangsfläche des Gehäuse abschnittsweise in das Gehäuse hinein erstreckender und mit dem stromaufwärtigen Ende der Einfüllvorrichtung verbundener Entlastungskanal vorgesehen ist, welcher sich von dem stromaufwärtigen Ende der Einfüllvorrichtung in der Längsrichtung des Gehäuses (10) gesehen zumindest abschnittsweise in Richtung der Dichtung erstreckt. Indem die Einfüllvorrichtung, wie insbesondere Einfülltrichter, der Misch- und Knetmaschine mindestens zwei voneinander durch mindestens eine Trennwand getrennte sowie sich jeweils über die Höhe der Einfüllvorrichtung erstreckende Hohlräume umfasst, wird es einfach möglich, die Dichtung bzw. Stopfbuchse während des Betriebs der Misch- und Knetmaschine zu entlasten. Durch diese Ausgestaltung der Einfüllvorrichtung wird es nämlich erreicht, dass durch die Zuführung des Ausgangsmaterials über einen der Hohlräume der Einfüllvorrichtung in den Prozessraum bzw. Innenraum der Misch- und Knetmaschine eingebrachte Luft einfach über den anderen Hohlraum oder zumindest größtenteils über den anderen Hohlraum der Einfüllvorrichtung wieder aus der Misch- und Knetmaschine abgeführt wird. Da sich die Einfüllvorrichtung durch die sich durch die Gehäusewand hindurch erstreckende Aussparung erstreckt oder mit dieser verbunden ist, sind die beiden Hohlräume der Einfüllvorrichtung der Misch- und Knetmaschine in ihrem unteren Bereich mit dem Innen- bzw. Prozessraum, d.h. dem Zwischenraum zwischen der Schneckenwelle und der Gehäuseinnenumfangsfläche, der Misch- und Knetmaschine verbunden. Mitgerissene Luft, die durch einen der beiden Hohlräume über die Aussparung in den Prozessraum eingetragen wird, kann nämlich aus diesem Grund über die untere Öffnung des benachbarten Hohlraums der Einfüllvorrichtung in diesen eindringen und durch diesen von unten nach oben durch die Einfüllvorrichtung in die Umgebung entweichen. Zur Verbesserung des Entweichens der Luft durch diesen Hohlraum der Einfüllvorrichtung kann an diesen Hohlraum auch Vakuum, wie beispielsweise ein Vakuum zwischen 50 kPa und knapp unter 100 kPa. Somit fungiert bei der erfindungsgemäßen Misch- und Knetmaschine einer der mindestens zwei Hohlräume der Einfüllvorrichtung als Zufuhr- bzw. Einfüllkanal für das Ausgangsmaterial, wohingegen ein anderer der mindestens zwei Hohlräume der Einfüllvorrichtung als Entlüftungskanal fungiert. Daher wird die bei der Zufuhr des Ausgangsmaterials in den Prozessraum eingeführte Luft schnell und zuverlässig entfernt, so dass sich diese nicht oder zumindest nicht in nennenswertem Umfang im dem Prozessraum ansammeln und nicht bei dem Rückwärtshub der sich in der axialen Richtung der Misch- und Knetmaschine translatorisch hin- und her bewegenden Schneckenwelle gegen die Stopfbuchse gedrückt werden kann. Dadurch wird vermieden, dass Luft und darin mitgerissene Pulver- oder Granulatpartikel durch die Stopfbuchse in den Getriebeflansch gelangen können. Ferner wird dadurch verhindert, dass durch das Mitreißen und Überführen vornehmlich der feinen Partikel einer Mischung verschiedener Komponenten des Ausgangsmaterials in den Getriebeflansch das Mischungsverhältnis der Komponenten des Ausgangsmaterials in dem Prozessraum unerwünscht verändert wird. Zudem wird dadurch der Schneckengang optimal mit dem Ausgangsmaterial gefüllt, und zwar insbesondere auch bei Pulver mit einem sehr geringen Schüttgewicht. Nach alledem wird bei dem Betrieb der erfindungsgemäßen Misch- und Knetmaschine die zwischen der Tragwelle der Schneckenwelle, der diese umgebenden Gehäusewand und dem Getriebeflansch angeordnete Dichtung, insbesondere Stopfbuchse, entlastet, so dass deren Betriebsdauer bzw. die Zeitspanne, während der diese den Verbindungsbereich zwischen der Tragwelle und dem Getriebeflansch luftdicht hält bzw. ein Eindringen von Luft und partikulärem Material von dem Prozessraum der Misch- und Knetmaschine in den Getriebeflansch zuverlässig verhindert, signifikant verlängert wird. Bei dem Betrieb der erfindungsgemäßen Misch- und Knetmaschine muss nur darauf geachtet werden, dass das Ausgangsmaterial nur durch eine der mindestens zwei Hohlräume der Einfüllvorrichtung der Misch- und Knetmaschine zugeführt wird, während mindestens ein anderer der mindestens zwei Hohlräume der Einfüllvorrichtung freigehalten wird.

In Weiterbildung des Erfindungsgedankens wird es vorgeschlagen, dass die mindestens zwei Hohlräume der Einfüllvorrichtung so voneinander getrennt sind, dass wenigstens einer der mindestens zwei Hohlräume - in der Längsrichtung des Gehäuses gesehen - gegenüber mindestens einem anderen der mindestens zwei Hohlräume versetzt oder zumindest teilweise versetzt angeordnet ist. Versetzt angeordnet bedeutet in diesem Zusammenhang, dass der eine Hohlraum stromaufwärts von dem anderen Hohlraum angeordnet ist. Dabei heißt stromaufwärts und stromabwärts, dass der stromaufwärtige Hohlraum näher an dem stromaufwärtigen Ende des Gehäuses der Misch- und Knetmaschine angeordnet ist als der stromabwärtige Hohlraum, bzw., dass der stromabwärtige Hohlraum näher an dem stromabwärtigen Ende des Gehäuses der Misch- und Knetmaschine angeordnet ist als der stromaufwärtige Hohlraum. Dabei ist das stromaufwärtige Ende des Gehäuses der Misch- und Knetmaschine das Ende des Gehäuses, welches mit dem Antrieb verbunden ist bzw. dem das Ausgangsmaterial zugeführt wird, und ist das stromabwärtige Ende des Gehäuses der Misch- und Knetmaschine das Ende des Gehäuses, aus welchem das vermischte und geknetete Produkt abgeführt wird. Teilweise versetzt angeordnet bedeutet in diesem Zusammenhang, dass der stromaufwärtige Teil eines Hohlraums stromaufwärts von dem stromaufwärtigen Teil des anderen Hohlraums angeordnet ist, wohingegen die anderen Teile der beiden Hohlräume, bezogen auf die Längsrichtung des Gehäuses, nebeneinander angeordnet sein können. Indem zumindest ein Teil eines der Hohlräume der Einfüllvorrichtung stromaufwärts eines anderen der Hohlräume der Einfüllvorrichtung angeordnet ist, wird es möglich, dass das Ausgangsmaterial dem Prozessraum bzw. Innenraum des Gehäuses der Misch- und Knetmaschine nur durch den stromabwärtigen Hohlraum der Einfüllvorrichtung zugeführt wird, wohingegen der stromaufwärtige Hohlraum der Einfüllvorrichtung freigelassen wird und somit als Entlüftungskanal fungieren kann. Dadurch wird die durch das durch den stromabwärtigen Hohlraum der Einfüllvorrichtung zugeführte Ausgangsmaterial in den Innenraum des Gehäuses der Misch- und Knetmaschine eingeführte Luft bei dem Rückwärtshub der Schneckenwelle unter die untere Öffnung des stromaufwärtigen Hohlraums der Einfüllvorrichtung gedrückt, so dass die Luft durch den stromaufwärtigen Hohlraum von unten nach oben aus der Einfüllvorrichtung wieder entweichen kann.

Bezüglich der Form der Einfüllvorrichtung ist die vorliegende Erfindung nicht besonders beschränkt, solange wenigstens einer der Hohlräume der Einfüllvorrichtung so dimensioniert und ausgestaltet ist, dass die vorgesehene Menge an Ausgangsmaterial pro Zeiteinheit zugeführt werden kann. Gute Ergebnisse werden insbesondere erhalten, wenn die Einfüllvorrichtung die Form eines Quaders, eines Zylinders, eines Kegels, eines Kegelstumpfes, eines umgedrehten Kegels, eines umgedrehten Kegelstumpfes, eines Keils, eines Keilstumpfes, eines umgedrehten Keils oder eines umgedrehten Keilstumpfes aufweist. Wie vorstehend dargelegt, erstreckt sich die Einfüllvorrichtung durch eine sich durch die Gehäusewand hindurch erstreckende Aussparung oder ist mit einer sich durch die Gehäusewand hindurch erstreckenden Aussparung verbunden. Unter einer sich durch eine sich durch die Gehäusewand hindurch erstreckende Aussparung erstreckenden Einfüllvorrichtung wird dabei verstanden, dass sich die unteren Seitenwände der Einfüllvorrichtung entlang der Innenkanten der Aussparung erstrecken und mit diesen verbunden sind, weil andernfalls ein inakzeptabler Hohlraum zwischen den unteren Seitenwänden der Einfüllvorrichtung und den Innenkanten der Aussparung entstehen würde. Hingegen wird unter einer mit einer sich durch die Gehäusewand hindurch erstreckenden Aussparung verbundenen Einfüllvorrichtung verstanden, dass die unteren Seitenwände der Einfüllvorrichtung bündig auf der oberen Umgrenzung der Aussparung aufsetzen, so dass die Innenkanten der unteren Seitenwände der Einfüllvorrichtung bündig mit den Innenkanten der Aussparung verbunden sind. Unabhängig davon, ob sich die Einfüllvorrichtung durch eine sich durch die Gehäusewand hindurch erstreckende Aussparung erstreckt oder mit einer sich durch die Gehäusewand hindurch erstreckenden Aussparung verbunden ist, wird als Einfüllvorrichtung die Summe der Hohlräume verstanden, welche durch die Seitenwände der Einfüllvorrichtung und die Innenkanten der Aussparung gebildet werden. Wenn demnach die Einfüllvorrichtung auf der Aussparung aufsetzt, wird als Einfüllvorrichtung die Summe aus Einfüllvorrichtung und Aussparung verstanden. Ein umgedrehter Keil oder umgedrehter Keilstumpf bezeichnet dabei einen um 180° gegenüber der Horizontalen gedrehten Keil bzw. Keilstumpf, d.h. einen Keil bzw. Keilstumpf, bei dem die größere Basisfläche oben angeordnet ist.

Gemäß einer weiteren bevorzugten Ausführungsform der vorliegenden Erfindung ist es vorgesehen, dass die Seiten der Einfüllvorrichtung durch Wände verschlossen sind, das untere Ende der Einfüllvorrichtung offen ist und das obere Ende der Einfüllvorrichtung offen ist oder mit einer mit zwei oder mehreren offenen Stutzen versehene Abdeckung ist.

Um die mindestens zwei Hohlräume der Einfüllvorrichtung der Misch- und Knetmaschine so zu trennen, dass kein zugeführtes Ausgangsmaterial von einem Hohlraum in den anderen gelangen kann, ist es besonders bevorzugt, dass sich die mindestens eine Trennwand über die gesamte Höhe der Einfüllvorrichtung erstreckt. Allerdings ist es auch möglich, wenn auch weniger bevorzugt, dass sich die mindestens eine Trennwand über mindestens 50% oder über mindestens 80% oder über mindestens 90% der gesamten Höhe der Einfüllvorrichtung erstreckt, und zwar bevorzugt von der Unterkante der Einfüllvorrichtung bzw. der Aussparung der Gehäusewand, wenn die Einfüllvorrichtung darauf aufsitzt, und weiter bevorzugt von knapp oberhalb der äußersten Begrenzung der Schneckenwelle, nämlich von 0,1 bis 10 mm, weiter bevorzugt von 0,3 bis 5 mm und ganz besonders bevorzugt von 0,5 bis 2 mm oberhalb der äußersten Begrenzung der Schneckenwelle nach oben. In den Fällen, in denen sich die mindestens eine Trennwand über mindestens 50% oder über mindestens 80% oder über mindestens 90% der gesamten Höhe der Einfüllvorrichtung erstreckt, ist das Ausgangsmaterial entsprechend vorsichtig in den Zufuhrschacht der Einfüllvorrichtung einzubringen. Unter Höhe der Einfüllvorrichtung wird dabei der vertikale Abstand von der Unterkante der Einfüllvorrichtung bzw. der Aussparung der Gehäusewand, wenn die Einfüllvorrichtung darauf aufsitzt, bis zu dem oberen Ende der Seitenwände, d.h. in dem Fall, dass eine Abdeckung auf dem oberen Ende der Einfüllvorrichtung angeordnet ist, bis zu der Unterkante der Abdeckung, unabhängig davon, ob auf der Abdeckung noch weitere Aufbauten, wie Einfüllstutzen, vorhanden sind, verstanden.

Gemäß einer weiteren bevorzugten Ausführungsform der vorliegenden Erfindung ist es vorgesehen, dass die Einfüllvorrichtung die Form eines Quaders, eines Keilstumpfes oder eines umgedrehten Keilstumpfes aufweist, wobei sich eine Trennwand zumindest im Wesentlichen parallel zu der Querschnittsfläche des Gehäuses über mindestens 50%, bevorzugt über mindestens 80%, besonders bevorzugt über mindestens 90% und höchst bevorzugt über die gesamte Höhe der Einfüllvorrichtung sowie über mindestens 50%, bevorzugt über mindestens 80%, besonders bevorzugt über mindestens 90% und höchst bevorzugt über die gesamte Breite der Einfüllvorrichtung erstreckt. Im Wesentlichen parallel zu der Querschnittsfläche bedeutet in diesem Zusammenhang, dass die Trennwand in einem Winkel von +20°C bis -20°, bevorzugt von +10°C bis -10° und besonders bevorzugt von +5°C bis -5° zu der Querschnittsfläche angeordnet ist. Höchst bevorzugt erstreckt sich die Trennwand parallel zu der Querschnittsfläche des Gehäuses.

In Weiterbildung des Erfindungsgedankens wird es vorgeschlagen, dass die Einfüllvorrichtung zwei Trennwände umfasst, von denen sich eine Trennwand zumindest im Wesentlichen parallel zu der Querschnittsfläche des Gehäuses und die andere Trennwand zumindest im Wesentlichen parallel zu der Längsfläche des Gehäuses erstreckt, wobei die beiden Trennwände so miteinander verbunden sind, das im Querschnitt des Einfülltrichters gesehen zwei voneinander vollständig getrennte Hohlräume vorgesehen sind. Auf diese Weise können einfach teilweise gegeneinander versetzt angeordnete Hohlräume in der Einfüllvorrichtung realisiert werden. Auch bei dieser Ausführungsform ist es bevorzugt, dass sich beide Trennwände über mindestens 50%, weiter bevorzugt über mindestens 80%, besonders bevorzugt über mindestens 90% und höchst bevorzugt über die gesamte Höhe der Einfüllvorrichtung erstrecken.

Erfindungsgemäß ist i) zwischen dem Getriebeflansch und dem damit verbundenen stromaufwärtigen Ende des Gehäuses und/oder ii) in dem stromaufwärtigen Ende des Gehäuses eine die Schneckenwelle gegenüber der Innenumfangsfläche des Gehäuses abdichtende Dichtung, bevorzugt Stopfbuchse, vorgesehen und in dem Gehäuse mindestens ein sich von der Innenumfangsfläche des Gehäuse abschnittsweise in das Gehäuse (d.h. in die Gehäusewand) hinein erstreckender und mit dem stromaufwärtigen Ende der Einfüllvorrichtung verbundener Entlastungskanal vorgesehen, welcher sich von dem stromaufwärtigen Ende der Einfüllvorrichtung in der Längsrichtung des Gehäuses gesehen zumindest abschnittsweise in Richtung der Dichtung erstreckt. Wie vorstehend dargelegt, ist die Dichtung notwendig, um zu verhindern, dass bei einem Rückwärtshub der sich axial translatorisch vor- und zurückbewegenden Schneckenwelle Luft und/oder Ausgangsmaterial in den Getriebeflansch eindringt. Durch das Vorsehen mindestens eines Entlastungskanals, welcher sich von dem stromaufwärtigen Ende der Einfüllvorrichtung in der Längsrichtung des Gehäuses gesehen zumindest abschnittsweise in Richtung der Dichtung erstreckt, wird es erreicht, dass diejenige Luft mit etwaig mitgerissenem Ausgangsmaterial, welche bei einem Rückwärtshub der sich axial translatorisch vor- und zurückbewegenden Schneckenwelle in die stromaufwärtige Richtung gedrückt wird und nicht durch den als Entlüftungskanal fungierenden stromaufwärtigen Hohlraum der Einfüllvorrichtung durch die Einfüllvorrichtung ausgetragen wird, sondern in einen Bereich stromaufwärts von dem stromaufwärtigen Ende des als Entlüftungskanal fungierenden Hohlraums der Einfüllvorrichtung gelangt, durch den mindestens einen Entlastungskanal dem Entlüftungskanal zugeführt und somit über die Einfüllvorrichtung aus der Misch- und Knetmaschine abgeführt wird. Dadurch wird die Dichtung und bevorzugt Stopfbuchse noch weiter entlastet. Unter einem sich abschnittsweise in das Gehäuse hinein erstreckenden Entlastungskanal wird eine Vertiefung verstanden, welche sich von der Innenumfangsfläche des Gehäuses in die Gehäusewand hinein, aber nicht vollständig durch die Gehäusewand hindurch erstreckt. Dabei kann die Vertiefung in Draufsicht jede beliebige geometrische Form aufweisen, also eine andere als eine rechteckige. Der Bestandteil Kanal in dem Wort Entlastungskanal ist hier funktionell gemeint und nicht auf die geometrische Form des Entlastungskanals bezogen. Vorzugsweise weist jedoch der Entlastungskanal in Draufsicht eine rechteckige Form auf, also dreidimensional gesehen die Form eines Kanals auf.

Vorzugsweise erstreckt sich der Entlastungskanal auf der Innenumfangsfläche des Gehäuses von der stromaufwärtigen Innenkante der Aussparung, durch welche sich der untere Teil der Einfüllvorrichtung bzw. die unteren Teile der Seitenwände der Einfüllvorrichtung erstrecken, bzw. mit welcher der untere Teil der Einfüllvorrichtung bzw. die unteren Teile der Seitenwände der Einfüllvorrichtung verbunden sind, zumindest im Wesentlichen parallel zu der Längsrichtung des Gehäuses in stromaufwärtiger Richtung in Richtung der Dichtung bzw. Stopfbuchse. Im Wesentlichen parallel zu der Längsrichtung des Gehäuses bedeutet in diesem Zusammenhang, dass der Entlastungskanal in einem Winkel von +20°C bis -20°, bevorzugt von +10°C bis -10° und besonders bevorzugt von +5°C bis -5° zu der Längsrichtung des Gehäuses angeordnet ist. Höchst bevorzugt erstreckt sich der Entlastungskanal parallel zu der Längsrichtung des Gehäuses. Alternativ dazu kann der Entlastungskanal auch in der Form einer Spirale oder dergleichen verlaufen.

Üblicherweise ist das Gehäuse einer solchen Misch- und Knetmaschine aus zwei Gehäusehälften zusammengesetzt, welche voneinander weggeklappt oder zu einem geschlossenen Gehäuse zugeklappt werden können. Im Fall von Gehäusehälften ist es bevorzugt, dass ein Entlastungskanal an der Kante der Innenumfangsfläche einer der beiden Gehäusehälften oder jeweils ein Entlastungskanal an der Kante der Innenumfangsfläche jeder der beiden Gehäusehälften vorgesehen ist. In diesem Fall kann der Entlastungskanal bzw. können die Entlastungskanäle einfach durch Fräsen einer Nut an die Kante der Gehäusehälftewand angefertigt werden.

In Weiterbildung des Erfindungsgedankens wird es vorgeschlagen, dass sich der mindestens eine Entlastungskanal von dem stromaufwärtigen Ende der Einfüllvorrichtung über mindestens 20%, bevorzugt mindestens 40%, weiter bevorzugt mindestens 60%, noch weiter bevorzugt mindestens 80%, besonders bevorzugt mindestens 90% und höchst bevorzugt über die gesamte Länge bis zu der Dichtung erstreckt. Dadurch wird ein besonders hoher Anteil des bei dem Rückwärtshub der Schneckenwelle in den Bereich der Stopfbuchse zurückgeführten Luft über den Entlastungskanal in den Entlüftungskanal geführt und durch den Entlüftungskanal aus der Misch- und Knetmaschine abgeführt.

Gemäß einer weiteren bevorzugten Ausführungsform der vorliegenden Erfindung ist es bevorzugt, dass sich der mindestens eine Entlastungskanal von der Innenumfangsfläche des Gehäuses aus gesehen um 1 bis 50%, bevorzugt um 2 bis 20% und besonders bevorzugt um 2 bis 10% in die Gehäusewand hinein erstreckt und/oder eine Breite von 0,005 bis 0,5 Da, bevorzugt 0,02 bis 0,3 Da, besonders bevorzugt 0,05 bis 0,2 Da und ganz besonders bevorzugt 0,08 bis 0,12 Da, wie ungefähr 0,1 Da, aufweist, wobei Da der Durchmesser des hohlen Innenraums ist, und, wenn der hohle Innenraum nicht zylindrisch ist, der größte Abstand von einem Punkt der Innenumfangsfläche zu einem lotrecht gegenüberliegenden Punkt der Innenumfangsfläche des Gehäuses ist. Beispielsweise beträgt die Breite 0,1 mm bis 100 mm, bevorzugt 0,5 mm bis 20 mm und weiter bevorzugt 0,5 mm bis 10 mm. Ein solcher Entlastungskanal weist ein zur effizienten Abführung von Luft hinreichend großes Volumen auf.

Bezüglich der Geometrie des mindestens einen Entlastungskanals ist die vorliegende Erfindung nicht besonders beschränkt. Gute Ergebnisse werden insbesondere erhalten, wenn der mindestens eine Entlastungskanal einen ovalen, runden, rechteckigen oder quadratischen und bevorzugt einen rechteckigen oder quadratischen Querschnitt aufweist.

Gemäß einer weiteren ganz besonders bevorzugten Ausführungsform der vorliegenden Erfindung ist es vorgesehen, dass die Dichtung eine Stopfbuchse ist, in welcher zwischen den Packungsschnüren mindestens ein Metallring oder Kunststoffring aus temperaturbeständigem Kunststoff vorgesehen ist, wobei in dem die Dichtung bzw. Stopfbuchse radial umgebenden Längsabschnitt des Gehäuses mindestens ein Verbindungskanal vorgesehen ist, über den ein Gas von dem stromäufwärtigen Bereich des Gehäuses in den Innenraum des Gehäuses eingeströmt werden kann. Der Metallring bzw. Kunststoffring kann insbesondere auch zweiteilig ausgebildet sein, damit er einfach ausgetauscht werden kann, ohne dass die Schneckenwelle ausgebaut werden muss. Über den mindestens einen Verbindungskanal kann eine weitere Entlastung der Dichtung bzw. Stopfbuchse erreicht werden, indem ein als Sperrfluid wirkendes Gas, wie Luft oder Stickstoff, oder eine als Sperrfluid wirkende Flüssigkeit, wie Wasser oder eine andere produktverträgliche Flüssigkeit, über den mindestens einen Verbindungskanal in den Innenraum des Gehäuses zugeführt wird, und zwar vorzugsweise mit einem höheren Druck als dem in dem Innenraum anliegenden Druck. Das Sperrfluid wird über den Metallring bzw. Kunststoffring verteilt. Dadurch wird erreicht, dass der Widerstand für ein etwaiges Durchdringen von Luft aus dem Innenraum des Gehäuses durch die Dichtung bzw. Stopfbuchse erhöht wird und somit die Stopfbuchse noch weiter entlastet wird. Zudem wird dadurch noch zuverlässiger vermieden, dass etwaig durch die Luft mitgerissene Materialteilchen in die Dichtung bzw. Stopfbuchse eindringen. Dadurch wird die Betriebsdauer einer Dichtung bzw. Stopfbuchse in der Misch- und Knetmaschine drastisch erhöht, nämlich beispielsweise von 2 Wochen auf über 6 Monate. Das in den Innenraum eingedrungene Sperrfluid gelangt über den Entlastungskanal in den Entlüftungskanal und verlässt über diesen die Misch- und Knetmaschine, so dass das eingebrachte Sperrfluid das Aufbereiten des Ausgangsmaterials in der Misch- und Knetmaschine nicht beeinträchtigt.

In Weiterbildung des Erfindungsgedankens wird es vorgeschlagen, in jeder der vorstehend beschriebenen Ausführungsformen zusätzlich ein Messgerät vorzusehen, welches den Sperrfluiddruck einstellt und überwacht und vorzugsweise bei zu niedrigem Druck ein Alarm generiert. Hierzu kann insbesondere ein Druckmessgerät eingesetzt werden.

Erfindungsgemäß umfasst die Misch- und Knetmaschine eine wie vorstehend beschrieben ausgestaltete Einfüllvorrichtung. Zusätzlich dazu kann die Misch- und Knetmaschine, muss aber nicht, ein oder mehrere weitere Einfüllvorrichtungen aufweisen. Jede der optionalen weiteren Einfüllvorrichtung(en) kann wie die vorstehend beschriebene erfindungsgemäße Einfüllvorrichtung ausgestaltet sein. Vorzugsweise ist jedoch jede der optionalen weiteren Einfüllvorrichtung(en) anders als die vorstehend beschriebene ausgestaltet, nämlich als Seitenzuführung zu dem Gehäuse. Wenn die Misch- und Knetmaschine zwei oder mehr Einfüllvorrichtungen aufweist, ist es bevorzugt, dass zumindest die am meisten stromaufwärts angeordnete Einfüllvorrichtung wie vorstehend beschrieben ausgestaltet ist. Die eine oder mehr stromabwärts davon angeordneten Einfüllvorrichtungen können beispielsweise vorgesehen sein, um eine weitere zu vermischende Komponente in den Innenraum der Misch- und Knetmaschine an einer Stelle zuzufügen, in der die stromaufwärts dazu bereits zugegebene(n) Komponente(n) bereits in einem gewissen Ausmaß vorvermischt wurden bzw. geschmolzen wurden.

Eine Misch- und Knetmaschine umfasst gemäß der vorliegenden Erfindung ein Gehäuse und eine in dem Gehäuse angeordnete Schneckenwelle. Das Gehäuse umfasst vorzugsweise zwei Gehäusehälften, die innen mit einer sogenannten Gehäuseschale ausgekleidet sein können, aber nicht müssen. Dabei wird die Gehäuseschale, sofern vorhanden, in der vorliegenden Patentanmeldung als Bestandteil des Gehäuses betrachtet. Die Innenumfangsfläche des Gehäuses begrenzt, wenn die beiden Gehäusehälften geschlossen sind, einen vorzugsweise zylindrischen hohlen Innenraum, also einen Innenraum mit kreisförmigem Querschnitt. Die Schneckenwelle umfasst einen Wellenstab bzw. eine Tragwelle, auf dessen Umfangsfläche Flügelelemente angeordnet sind, welche sich auf der Umfangsfläche des Wellenstabes radial nach außen erstrecken, wobei die einzelnen Flügelelemente voneinander beabstandet sind. In den beiden Gehäusehälften sind zudem Aufnahmen für Knetelemente, wie für Knetbolzen, Knetzähne und dergleichen, vorgesehen. Dabei ist jede der Aufnahmen eine Bohrung, welche sich von der Innenumfangsfläche des Gehäuses durch die Gehäusewand hindurch erstreckt. Dabei erstrecken sich die voneinander jeweils gleich beabstandeten Aufnahmen für die Knetbolzen in jeder der beiden Gehäusehälften, in der axialen Richtung gesehen, vorzugsweise in der Form von mindestens zwei Reihen und bevorzugt zwei bis sechs Reihen. Auch die Flügelelemente sind auf der Umfangsfläche des Wellenstabes in mindestens zwei und bevorzugt zwei bis sechs sich in der axialen Richtung der Schneckenwelle erstreckenden Reihen angeordnet.

Ein weiterer Gegenstand der vorliegenden Erfindung ist ein Verfahren gemäss Anspruch 14 zum Mischen und Kneten eines Ausgangsmaterials, welches in einer zuvor beschriebenen Misch- und Knetmaschine betrieben wird. Das erfindungsgemäße Verfahren umfasst die Schritte des Anschaltens des Antriebs und des Zuführens von zu mischendem und knetendem Ausgangsmaterial über selektiv nur einen der mindestens zwei Hohlräume der Einfüllvorrichtung in den Innenraum des Gehäuses.

Vorzugsweise wird das Verfahren in einer zuvor beschriebenen Misch- und Knetmaschine durchgeführt, welche mindestens einen Entlastungskanal sowie mindestens einen Verbindungskanal umfasst, wobei das Gas bzw. Sperrfluid mit einem Druck in das Gehäuse eingeführt wird, der um 500 Pa bis 10 MPa und bevorzugt um 10 KPa bis 0,3 MPa höher ist als der in dem Innenraum des Gehäuses anliegende Druck.

Nachfolgend wird die vorliegende Erfindung unter Bezug auf die Zeichnung näher beschrieben, in der:

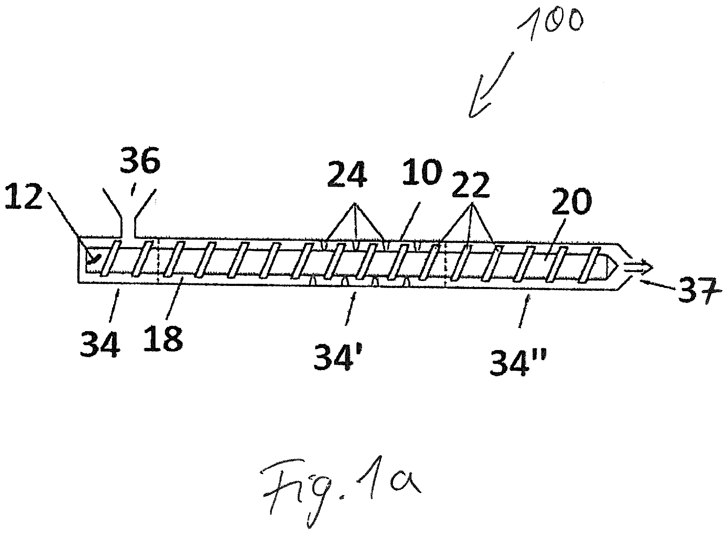

- Fig. 1a: einen schematischen Längsschnitt einer Misch- und Knetmaschine zeigt.
- Fig. 1 b: eine perspektivische Ansicht des Gehäuses der in der Fig. 1a gezeigten Misch- und Knetmaschine zeigt.
- Fig. 2: einen Querschnitt des Gehäuses und der Einfüllvorrichtung einer Misch- und Knetmaschine gemäß einem Ausführungsbeispiel der vorliegenden Erfindung zeigt.
- Fig. 3a: einen Längsschnitt des Gehäuses und der Einfüllvorrichtung einer Misch- und Knetmaschine gemäß einem anderen Ausführungsbeispiel der vorliegenden Erfindung zeigt.
- Fig. 3b: einen Horizontalschnitt der Einfüllvorrichtung der in der Figur 3a gezeigten Misch- und Knetmaschine zeigt.
- Fig. 4: einen Längsschnitt des Gehäuses und der Einfüllvorrichtung einer Misch- und Knetmaschine gemäß einem anderen Ausführungsbeispiel der vorliegenden Erfindung zeigt.

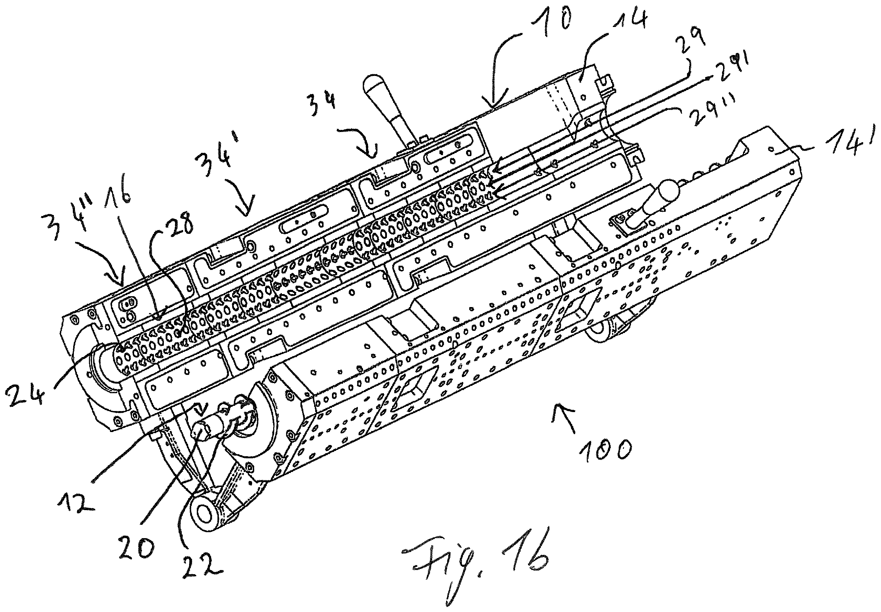

Die in den Figuren 1a und 1b gezeigte und im Ganzen mit 100 bezeichnete Misch- und Knetmaschine umfasst ein Gehäuse 10 und eine in dem Gehäuse 10 angeordnete Schneckenwelle 12. Das Gehäuse 10 umfasst zwei Gehäusehälften 14, 14', die innen mit einer sogenannten Gehäuseschale 16 ausgekleidet sind. Dabei wird die Gehäuseschale 16 in der vorliegenden Patentanmeldung als Bestandteil des Gehäuses 10 betrachtet. Die Innenumfangsfläche des Gehäuses 10 begrenzt, wenn die beiden Gehäusehälften 14, 14' geschlossen sind, einen zylindrischen hohlen Innenraum 18, also einen Innenraum 18 mit kreisförmigem Querschnitt. Die Schneckenwelle 12 umfasst einen Wellenstab 20, auf dessen Umfangsfläche Flügelelemente 22 angeordnet sind, welche sich auf der Umfangsfläche des Wellenstabes 20 radial nach außen erstrecken, wobei die einzelnen Flügelelemente 22 voneinander beabstandet sind. In den beiden Gehäusehälften 14, 14' sind Aufnahmen 28 für Knetelemente 24, also für Knetbolzen, Knetzähne und dergleichen, vorgesehen. Dabei ist jede der Aufnahmen 28 eine Bohrung 28, welche sich von der Innenumfangsfläche der Gehäuseschale 16 durch die Gehäusewand hindurch erstreckt. Das untere, radial innen liegende Ende jeder Aufnahme 28 kann beispielsweise im Querschnitt vierkantig ausgestaltet sein. Jeder Knetbolzen 24 kann dann beispielsweise an seinem unteren Ende ein passgenau in das vierkantig ausgestaltete radial innere Ende der Aufnahmen 28 passendes Ende aufweisen und ist dadurch im eingesetzten Zustand verdrehsicher in der Aufnahme 28 fixiert. Der Knetbolzen 24 ist an seinem in der Aufnahme 28 liegenden Ende mit einem in dem darüberliegenden Ende der Aufnahme 28 eingesetzten Fixierelement (nicht dargestellt) durch Verschrauben verbunden. Alternativ kann der Knetbolzen 24 auch ein Innengewinde für eine Schraube aufweisen und anstelle über das Fixierelement und der Mutter mit einer Schraube fixiert sein.

Wie insbesondere aus der Figur 1b hervorgeht, erstrecken sich die voneinander jeweils gleich beabstandeten Aufnahmen 28 für die Knetbolzen 24 in jeder der beiden Gehäusehälften 14, 14', in der axialen Richtung gesehen, in Form von drei Reihen 29, 29', 29". Somit beträgt die Gesamtzahl der Reihen von Aufnahmen 29, 29', 29" des Gehäuses sechs. Unter Reihe wird im Sinne der vorliegenden Erfindung verstanden, dass eine über die voneinander in axialer Richtung beabstandeten Aufnahmen 28 einer Reihe 29, 29', 29" gelegte Verbindungslinie eine Gerade ist. Wie in den Figuren 1a und 1b gezeigt, ist die Misch- und Knetmaschine 100 in axialer Richtung in mehrere Verfahrensabschnitte 34, 34', 34" unterteilt, wobei jeder Verfahrensabschnitt 34, 34', 34" hinsichtlich der Anzahl an Knetbolzen 24 sowie der Anzahl und der Ausdehnung der Flügelelemente 22 auf dem Wellenstab 20 an die Funktion der einzelnen Verfahrensabschnitte 34, 34', 34" angepasst ist. Wie in der Figur 1b dargestellt, sind in dem linken Abschnitt 34 und in dem rechten Abschnitt 34" der oberen Gehäusehälfte 14 von den drei Reihen 29, 29', 29" von Aufnahmen 28 für Knetbolzen 24 zwei Reihen, nämlich die obere Reihe 29 und die untere Reihe 29", mit Knetbolzen 24 bestückt, wohingegen die mittlere Reihe 29' nicht mit Knetbolzen 24 bestückt ist. Im Unterschied dazu ist in dem mittleren Abschnitt 34' der oberen Gehäusehälfte 14 von den drei Reihen 29, 29', 29" von Aufnahmen 28 für Knetbolzen 24 eine Reihe, nämlich die mittlere Reihe 29', mit Knetbolzen 24 bestückt, wohingegen die obere Reihe 29 und die untere Reihe 29" nicht mit Knetbolzen 24 bestückt ist. Auch in dem mittleren Abschnitt 34' der unteren Gehäusehälfte 14' ist lediglich die mittlere Reihe mit Knetbolzen bestückt, so dass der mittlere Abschnitt 34' des Gehäuses 10 insgesamt zwei Reihen von sich gegenüberliegenden Knetbolzen 24 aufweist, d.h. der Winkel zwischen den beiden Reihen von Knetbolzen 24 auf der Innenumfangsfläche des Gehäuses 10 beträgt 180°. Das zu mischende Ausgangsmaterial wird der Misch- und Knetmaschine 100 über die als Einfülltrichter ausgestaltete Einfüllvorrichtung 36 zugeführt, dann durch die Verfahrensabschnitte 34, 34', 34" geführt und schließlich über die Austrittsöffnung 37 abgeführt. Anstelle der dargestellten Verfahrensabschnitte 34, 34', 34" kann die erfindungsgemäße Misch- und Knetmaschine 100 auch mehr Verfahrensabschnitte, wie insbesondere auch vier Verfahrensabschnitte, oder weniger Verfahrensabschnitte, wie zwei oder einen Verfahrensabschnitt, aufweisen.

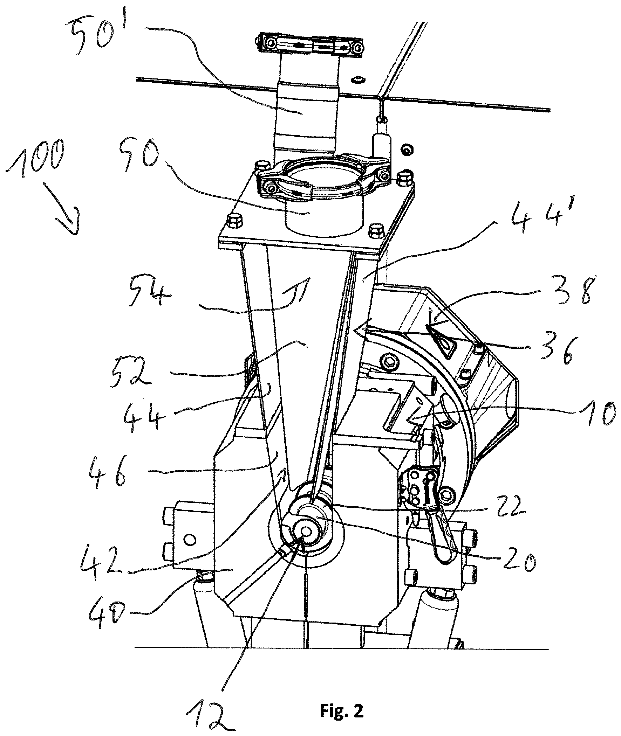

Die in der Figur 2 gezeigte Misch- und Knetmaschine 100 gemäß der vorliegenden Erfindung ist ähnlich wie die in den Figuren 1a und 1b gezeigte ausgestaltet, und umfasst ferner einen Antrieb, durch welchen die Schneckenwelle 12 bei dem Betrieb der Misch- und Knetmaschine 100 angetrieben bzw. rotiert wird. Zwischen dem Antrieb und dem stromaufwärtigen Ende des Gehäuses ist ein Getriebe angeordnet, welches mit dem stromaufwärtigen Ende des Gehäuses über einen Getriebeflansch 38 verbunden ist. Die an dem Gehäuse 10 angeordnete Einfüllvorrichtung 36 zum Zuführen mindestens eines zu mischenden und knetenden Ausgangsmaterials in den Innenraum 18 des Gehäuses 10 ist mit einer sich durch die Gehäusewand 40 hindurch erstreckenden Aussparung 42 verbunden. Dabei weist die Einfüllvorrichtung 36 die Form eines umgedrehten Keilstumpfes auf. Die die Einfüllvorrichtung 36 seitlich begrenzenden Seitenwände 44, 44' setzen mit ihrem jeweils unteren Ende bündig auf der oberen Umgrenzung der Aussparung 42 auf, so dass die Innenkanten der unteren Seitenwände 44, 44' der Einfüllvorrichtung 36 bündig mit den Innenkanten 46 der Aussparung 42 verbunden sind. Das obere Ende der Einfüllvorrichtung 36 ist durch eine Abdeckung 48 begrenzt, wobei die Abdeckung 48 zwei offene Stutzen 50, 50' umfasst. Erfindungsgemäß ist in der Einfüllvorrichtung 36 eine sich über die gesamte Höhe und Breite der Einfüllvorrichtung 36 erstreckende Trennwand 52 vorgesehen, welche die Einfüllvorrichtung in zwei Hohlräume 54, 54' trennt. Dabei sind die beiden Hohlräume 54, 54' in der Längsrichtung des Gehäuses 10 gesehen versetzt zueinander angeordnet, wobei der Hohlraum 54, von dem dem Antrieb zugewandten stromaufwärtigen Ende des Gehäuses 10 aus gesehen, stromabwärts von dem anderen (in der Figur 2 hinteren Hohlraum) angeordnet ist.

Bei dem Betrieb der in der Figur 2 gezeigten Misch- und Knetmaschine 100 wird kontinuierlich Ausgangsmaterial durch den als Einfüllkanal dienenden stromabwärtigen Hohlraum 54 der Einfüllvorrichtung 36 in den Innenraum 18 der Misch- und Knetmaschine 100 eingeführt. Durch die Zuführung des Ausgangsmaterials über den Hohlraum 54 der Einfüllvorrichtung 36 in den Innenraum 18 eingebrachte Luft dringt größtenteils über die untere Öffnung des benachbarten Hohlraums (in der Figur 2 hinteren Hohlraum) in diesen ein und wird dadurch von unten nach oben durch die Einfüllvorrichtung 36 abgeführt. Daher wird die bei der Zufuhr des Ausgangsmaterials in den Innenraum 18 eingeführte Luft schnell und zuverlässig entfernt, so dass sich diese nicht oder zumindest nicht in nennenswertem Umfang im dem Innenraum 18 ansammeln und nicht bei dem Rückwärtshub der sich in der axialen Richtung der Misch- und Knetmaschine 100 translatorisch hin- und her bewegenden Schneckenwelle 12 gegen die die Schneckenwelle 12 abdichtende Dichtung gedrückt werden kann. Dadurch wird vermieden, dass Luft und darin mitgerissene Pulver- oder Granulatpartikel durch die Dichtung in den Getriebeflansch 38 gelangen können.

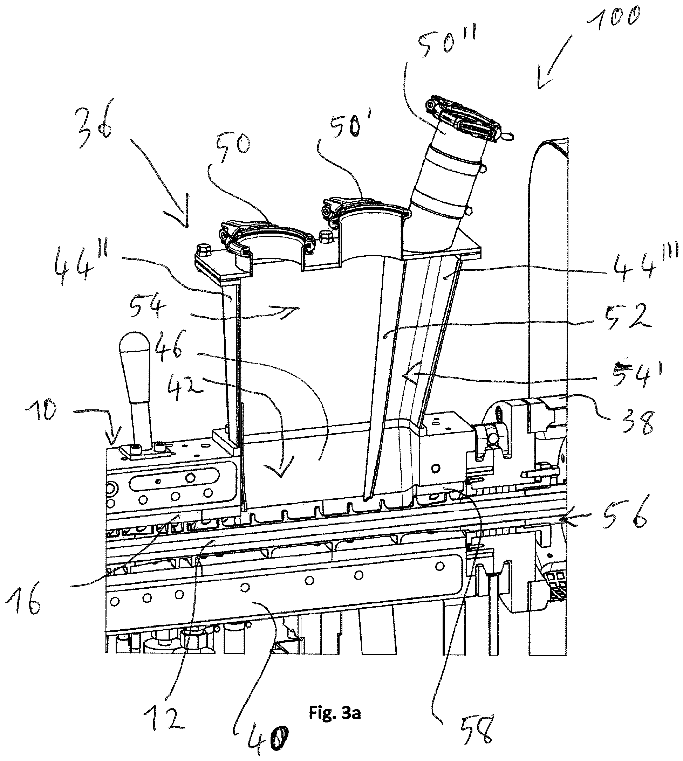

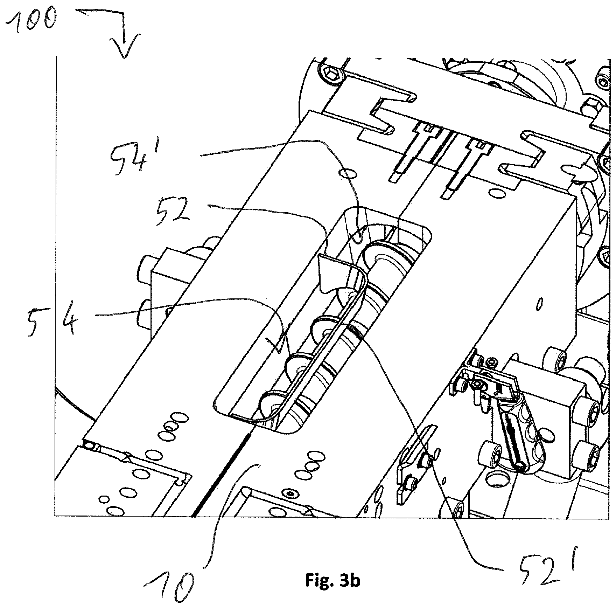

In der Figur 3a ist ein Längsschnitt des Gehäuses 10 und der Einfüllvorrichtung 36 einer Misch- und Knetmaschine 100 gemäß einem anderen Ausführungsbeispiel der vorliegenden Erfindung gezeigt. Dabei umfasst die Einfüllvorrichtung 36, wie in der Figur 3b genauer gezeigt, zwei Trennwände 52, 52', von denen sich eine Trennwand 52 parallel zu der Querschnittsfläche des Gehäuses 10 und die andere Trennwand 52' parallel zu der Längsfläche des Gehäuses 10 erstreckt. Dabei sind die beiden Trennwände 52, 52' so miteinander verbunden, das im Querschnitt des Einfülltrichters 36 gesehen zwei voneinander vollständig getrennte Hohlräume 54, 54' vorgesehen sind. Oben ist die Einfüllvorrichtung 36 durch eine Abdeckung 48 begrenzt, welche drei Stutzen 50, 50', 50" umfasst. Bei dieser Ausführungsform ist zwischen dem Getriebeflansch 38 und dem damit verbundenen stromaufwärtigen Ende des Gehäuses 10 eine Dichtung 56 in Form einer Stopfbuchse 56 vorgesehen, um die Schneckenwelle 12 gegenüber der Innenumfangsfläche des Gehäuses 10 abzudichten. Zudem ist in dem Gehäuse 10 bzw. der Gehäusewand 40 ein Entlastungskanal 58 angeordnet. Der Entlastungskanal 58 ist eine sich von der Innenumfangsfläche des Gehäuse 10 abschnittsweise in die Gehäusewand 40 hinein erstreckende und mit dem stromaufwärtigen Ende der Einfüllvorrichtung 36 verbundene Vertiefung, welche sich von dem stromaufwärtigen Ende der Einfüllvorrichtung 36 in der Längsrichtung des Gehäuses 10 gesehen in Richtung der Stopfbuchse 56 erstreckt, und zwar parallel zu der Längsrichtung des Gehäuses 10.

Bei dem Betrieb der in den Figuren 3a und 3b gezeigten Misch- und Knetmaschine 100 wird bei einem Rückwärtshub der sich axial translatorisch vor- und zurückbewegenden Schneckenwelle 12 diejenige Luft mit etwaig mitgerissenem Ausgangsmaterial, welche bei einem Rückwärtshub der sich axial translatorisch vor- und zurückbewegenden Schneckenwelle 12 in die stromaufwärtige Richtung gedrückt wird und nicht durch den als Entlüftungskanal 54' fungierenden stromaufwärtigen Hohlraum 54' der Einfüllvorrichtung 36 durch die Einfüllvorrichtung 36 ausgetragen wird, sondern in einen Bereich stromaufwärts von dem stromaufwärtigen Ende des als Entlüftungskanal 54' fungierenden Hohlraums 54' der Einfüllvorrichtung 36 gelangt, durch den Entlastungskanal 58 dem Entlüftungskanal 54' zugeführt und somit über die Einfüllvorrichtung 36 aus der Misch- und Knetmaschine 100 abgeführt. Dadurch wird die Stopfbuchse 56 noch weiter entlastet.

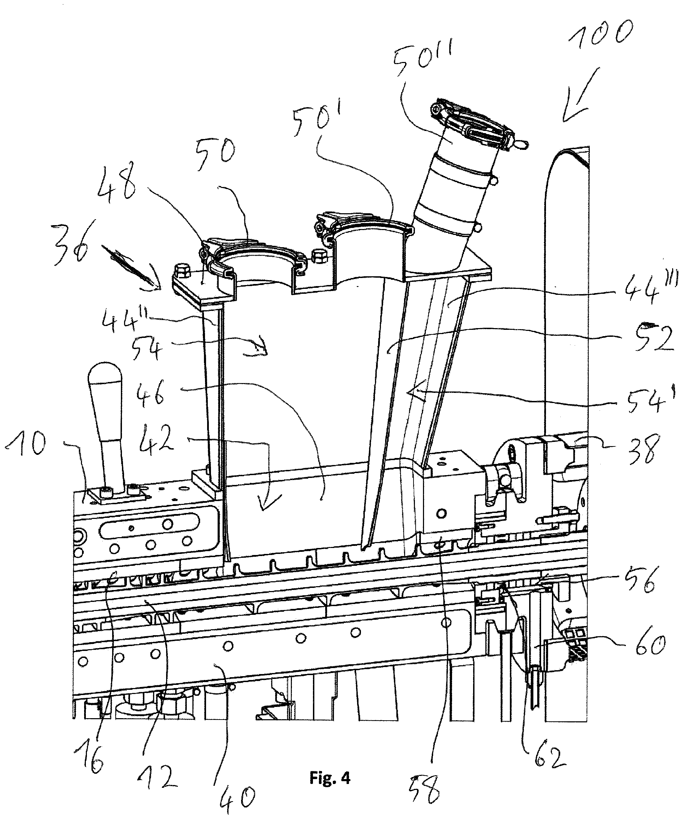

Bei der in der Figur 4 gezeigten Misch- und Knetmaschine 100 gemäß einem anderen Ausführungsbeispiel der vorliegenden Erfindung ist im Vergleich zu der in den Figuren 3a und 3b gezeigten Ausführungsform zusätzlich ein Verbindungskanal 60 vorgesehen, über den ein Fluid von dem stromäufwärtigen Bereich des Gehäuses 10 in den Innenraum 18 des Gehäuses 10 eingeströmt werden kann. Zudem weist die Stopfbuchse 56 bei dieser Ausführungsform zwischen den Packungsschnüren einen Metallring 62 auf. Über den Verbindungskanal 60 kann eine weitere Entlastung der Dichtung bzw. Stopfbuchse 56 erreicht werden, indem ein als Sperrfluid wirkendes Gas, wie Luft oder Stickstoff, über den Verbindungskanal 60 in den Innenraum 18 des Gehäuses 10 zugeführt wird, und zwar vorzugsweise mit einem höheren Druck als dem in dem Innenraum 18 anliegenden Druck. Dadurch wird erreicht, dass der Widerstand für ein etwaiges Durchdringen von Luft aus dem Innenraum 18 des Gehäuses 10 durch die Dichtung bzw. Stopfbuchse 56 erhöht wird und somit die Stopfbuchse 56 noch weiter entlastet wird. Zudem wird dadurch noch zuverlässiger vermieden, dass etwaig durch die Luft mitgerissene Materialteilchen in die Dichtung bzw. Stopfbuchse 56 eindringen. Dadurch wird die Betriebsdauer einer Dichtung bzw. Stopfbuchse in der Misch- und Knetmaschine 100 drastisch erhöht, nämlich beispielsweise von 2 Wochen auf über 6 Monate. Das in den Innenraum 18 eingedrungene Sperrfluid gelangt über den Entlastungskanal 58 in den Entlüftungskanal 54' und verlässt über diesen die Misch- und Knetmaschine 100.

### Bezugszeichenliste

- 10: Gehäuse
- 12: Schneckenwelle
- 14, 14': Gehäusehälfte
- 16: Gehäuseschale
- 18: Hohler Innenraum
- 20: Wellenstab
- 22: Flügelelement
- 24: Knetelement/Knetbolzen
- 28: Aufnahme/Bohrung für Knetelement
- 29, 29', 29": (Axial erstreckende) Reihe von Aufnahme für Knetelemente
- 34, 34', 34": Verfahrensabschnitt
- 36: Einfüllvorrichtung / Einfülltrichter
- 37: Austrittsöffnung
- 38: Getriebeflansch
- 40: Gehäusewand
- 42: Aussparung der Gehäusewand
- 44, 44', 44", 44'": Seitenwand der Einfüllvorrichtung
- 46: Innenkante der Aussparung
- 48: Abdeckung der Einfüllvorrichtung
- 50, 50', 50": Stutzen der Abdeckung
- 52, 52': Trennwand der Einfüllvorrichtung
- 54, 54': Hohlraum der Einfüllvorrichtung
- 56: Dichtung / Stopfbuchse
- 58: Entlastungskanal
- 60: Verbindungskanal
- 62: Metallring der Stopfbuchse
- 100: Misch- und Knetmaschine

## Patentansprüche

1. Misch- und Knetmaschine (100) für kontinuierliche Aufbereitungsprozesse, wie zum Kneten und Mischen von partikulärem Ausgangsmaterial und/oder zur Herstellung von Granulat, Strangpressprofilen oder Formteilen, mit einem Gehäuse (10), in welchem ein von der Innenumfangsfläche des Gehäuses (10) begrenzter und in der Längsrichtung der Misch- und Knetmaschine (100) verlaufender hohler Innenraum (18) ausgebildet ist, mit einer sich zumindest abschnittsweise in axialer Richtung durch den Innenraum (18) des Gehäuses (10) erstreckenden Schneckenwelle (12), die im Betrieb in dem Innenraum (18) des Gehäuses (10) rotiert und sich gleichzeitig in der axialen Richtung translatorisch hin- und her bewegt, mit einem Antrieb, welcher die Schneckenwelle (12) im Betrieb rotiert, und mit einer an dem Gehäuse (10) angeordneten Einfüllvorrichtung (36) zum Zuführen mindestens eines zu mischenden und knetenden Ausgangsmaterials in den Innenraum (18) des Gehäuses (10), wobei sich die Einfüllvorrichtung (36) durch eine sich durch die Gehäusewand (40) hindurch erstreckende Aussparung (42) erstreckt oder mit einer sich durch die Gehäusewand (40) hindurch erstreckenden Aussparung (42) verbunden ist,
**dadurch gekennzeichnet,**
**dass** die Einfüllvorrichtung (36) mindestens zwei sich jeweils über die Höhe der Einfüllvorrichtung (36) erstreckende Hohlräume (54, 54') umfasst, die voneinander durch mindestens eine Trennwand (52, 52') getrennt sind, und, dass i) zwischen dem Getriebeflansch (38) und dem damit verbundenen stromaufwärtigen Ende des Gehäuses (10) und/oder ii) in dem stromaufwärtigen Ende des Gehäuses (10) eine die Schneckenwelle (12) gegenüber der Innenumfangsfläche des Gehäuses (10) abdichtende Dichtung (56) vorgesehen ist, und in dem Gehäuse (10) mindestens ein sich von der Innenumfangsfläche des Gehäuse (10) abschnittsweise in das Gehäuse (10) hinein erstreckender und mit dem stromaufwärtigen Ende der Einfüllvorrichtung (36) verbundener Entlastungskanal (58) vorgesehen ist, welcher sich von dem stromaufwärtigen Ende der Einfüllvorrichtung (36) in der Längsrichtung des Gehäuses (10) gesehen zumindest abschnittsweise in Richtung der Dichtung (56) erstreckt.

2. Misch- und Knetmaschine (100) nach Anspruch 1, **dadurch gekennzeichnet, dass** die mindestens zwei Hohlräume (54, 54') so voneinander getrennt sind, dass wenigstens einer der mindestens zwei Hohlräume (54, 54') der Einfüllvorrichtung (36) in der Längsrichtung des Gehäuses (10) gesehen gegenüber mindestens einem anderen der mindestens zwei Hohlräume (54, 54') stromaufwärts versetzt oder zumindest teilweise stromaufwärts versetzt angeordnet ist.

3. Misch- und Knetmaschine (100) nach Anspruch 1 oder 2, **dadurch gekennzeichnet, dass** die Einfüllvorrichtung (36) die Form eines Quaders, eines Keils, eines Keilstumpfes, eines umgedrehten Keils oder eines umgedrehten Keilstumpfes aufweist, der sich durch die Aussparung (42) erstreckt oder mit der Aussparung (42) verbunden ist.

4. Misch- und Knetmaschine (100) nach einem der vorhergehenden Ansprüche, **dadurch gekennzeichnet, dass** die Seiten der Einfüllvorrichtung (36) durch Wände (44, 44', 44", 44'") verschlossen sind, das untere Ende der Einfüllvorrichtung (36) offen ist und das obere Ende der Einfüllvorrichtung (36) offen ist oder mit einer mit zwei oder mehreren offenen Stutzen versehene Abdeckung (48) ist.

5. Misch- und Knetmaschine (100) nach einem der vorhergehenden Ansprüche, **dadurch gekennzeichnet, dass** sich die mindestens eine Trennwand (52, 52') über mindestens 50%, bevorzugt über mindestens 80%, besonders bevorzugt über mindestens 90% und höchst bevorzugt über die gesamte Höhe der Einfüllvorrichtung (36) erstreckt, wobei sich die mindestens eine Trennwand (52, 52') von der Unterkante der Einfüllvorrichtung (36) aus oder von 0,1 bis 10 mm, bevorzugt von 0,3 bis 5 mm und besonders bevorzugt von 0,5 bis 2 mm oberhalb der äußersten Begrenzung der Schneckenwelle aus nach oben erstreckt.

6. Misch- und Knetmaschine (100) nach einem der vorhergehenden Ansprüche, **dadurch gekennzeichnet, dass** die Einfüllvorrichtung (36) die Form eines Quaders oder eines umgedrehten Keilstumpfes aufweist, der sich durch die Aussparung (42) erstreckt oder mit der Aussparung (42) verbunden ist, wobei sich eine Trennwand (52, 52') zumindest im Wesentlichen parallel zu der Querschnittsfläche des Gehäuses (10) über mindestens 50%, bevorzugt über mindestens 80%, besonders bevorzugt über mindestens 90% und höchst bevorzugt über die gesamte Höhe der Einfüllvorrichtung (36) sowie über mindestens 50%, bevorzugt über mindestens 80%, besonders bevorzugt über mindestens 90% und höchst bevorzugt über die gesamte Breite der Einfüllvorrichtung (36) erstreckt.

7. Misch- und Knetmaschine (100) nach einem der Ansprüche 1 bis 5, **dadurch gekennzeichnet, dass** die Einfüllvorrichtung (36) zwei Trennwände (52, 52') umfasst, von denen sich eine Trennwand (52) zumindest im Wesentlichen parallel zu der Querschnittsfläche des Gehäuses (10) und die andere Trennwand (52') zumindest im Wesentlichen parallel zu der Längsfläche des Gehäuses (10) erstreckt, wobei die beiden Trennwände (52, 52') so miteinander verbunden sind, das im Querschnitt der Einfüllvorrichtung (36) gesehen zwei voneinander vollständig getrennte Hohlräume (54, 54') vorgesehen sind.

8. Misch- und Knetmaschine (100) nach einem der vorhergehenden Ansprüche, **dadurch gekennzeichnet, dass** i) zwischen dem Getriebeflansch (38) und dem damit verbundenen stromaufwärtigen Ende des Gehäuses (10) und/oder ii) in dem stromaufwärtigen Ende des Gehäuses (10) eine die Schneckenwelle (12) gegenüber der Innenumfangsfläche des Gehäuses (10) abdichtende Stopfbuchse (56) vorgesehen ist.

9. Misch- und Knetmaschine (100) nach einem der Ansprüche 1 bis 8, **dadurch gekennzeichnet, dass** sich der mindestens eine Entlastungskanal (58) von dem stromaufwärtigen Ende der Einfüllvorrichtung (36) über mindestens 20%, bevorzugt mindestens 40%, weiter bevorzugt mindestens 60%, noch weiter bevorzugt mindestens 80%, besonders bevorzugt mindestens 90% und höchst bevorzugt über die gesamte Länge bis zu der Dichtung (56) erstreckt.

10. Misch- und Knetmaschine (100) nach einem der Ansprüche 1 bis 9, **dadurch gekennzeichnet, dass** sich der mindestens eine Entlastungskanal (58) von der Innenumfangsfläche des Gehäuses (10) aus gesehen um 1 bis 50%, bevorzugt um 2 bis 20% und besonders bevorzugt um 2 bis 10% in die Gehäusewand (40) hinein erstreckt.

11. Misch- und Knetmaschine (100) nach einem der Ansprüche 8 bis 10, **dadurch gekennzeichnet, dass** der mindestens eine Entlastungskanal (58) einen ovalen, runden, rechteckigen oder quadratischen und bevorzugt einen rechteckigen oder quadratischen Querschnitt aufweist.

12. Misch- und Knetmaschine (100) nach einem der Ansprüche 8 bis 11, **dadurch gekennzeichnet, dass** die Breite des mindestens einen Entlastungskanals (58) 0,005 bis 0,5 Da, bevorzugt 0,02 bis 0,3 Da, besonders bevorzugt 0,05 bis 0,2 Da und ganz besonders bevorzugt 0,08 bis 0,12 Da beträgt, wobei Da der Durchmesser des hohlen Innenraums ist, und, wenn der hohle Innenraum nicht zylindrisch ist, der grösste Abstand von einem Punkt der Innenumfangsfläche zu einem lotrecht gegenüberliegenden Punkt der Innenumfangsfläche des Gehäuses ist, wie in der Beschreibung beschrieben.

13. Misch- und Knetmaschine (100) nach einem der Ansprüche 8 bis 12, **dadurch gekennzeichnet, dass** in der Stopfbuchse (56) zwischen den Packungsschnüren mindestens ein Metallring (62) oder Kunststoffring vorgesehen ist, wobei in dem die Stopfbuchse (56) radial umgebenden Längsabschnitt des Gehäuses (10) mindestens ein Verbindungskanal (60) vorgesehen ist, über den ein Gas von dem stromäufwärtigen Bereich des Gehäuses (10) in den Innenraum (18) des Gehäuses (10) eingeströmt werden kann.

14. Verfahren zum Mischen und Kneten eines Ausgangsmaterials, **dadurch gekennzeichnet, dass** es in einer Misch- und Knetmaschine (100) nach einem der vorhergehenden Ansprüche betrieben wird, wobei der Antrieb angeschaltet wird und zu mischendes und knetendes Ausgangsmaterial über selektiv nur einen der mindestens zwei Hohlräume (54, 54') der Einfüllvorrichtung (36) zugeführt wird.

15. Verfahren nach Anspruch 14, **dadurch gekennzeichnet, dass** ein Gas mit einem Druck in das Gehäuse (10) eingeführt wird, der um 500 Pa bis 10 MPa und bevorzugt um 10 KPa bis 0,3 MPa höher ist als der in dem Innenraum (18) des Gehäuses (10) anliegende Druck.

## Claims

1. Mixing and kneading machine (100) for continuous preparation processes, such as for kneading and mixing particulate starting material and/or for producing granules, extruded profiles or molded parts, comprising a housing (10) in which a hollow interior (18) is formed which is delimited by the inner peripheral surface of the housing (10) and extends in the longitudinal direction of the mixing and kneading machine (100), a screw shaft (12) which extends through the interior (18) of the housing (10) at least in portions in the axial direction and which, during operation, rotates in the interior (18) of the housing (10) and simultaneously moves translationally back and forth in the axial direction, a drive which rotates the screw shaft (12) during operation, and a filling device (36) arranged on the housing (10) for feeding at least one starting material to be mixed and kneaded into the interior (18) of the housing (10), the filling device (36) extending through a recess (42) which extends through the housing wall (40) or being connected to a recess (42) which extends through the housing wall (40),
**characterized in that**
the filling device (36) comprises at least two cavities (54, 54') which each extend over the height of the filling device (36), and are separated from one another by at least one partition wall (52, 52'), and **in that** a seal (56) which seals the screw shaft (12) with respect to the inner peripheral surface of the housing (10) is provided i) between the gear flange (38) and the upstream end of the housing (10) connected thereto and/or ii) in the upstream end of the housing (10), and at least one discharge channel (58) is provided in the housing (10), which channel extends in portions from the inner peripheral surface of the housing (10) into the housing (10) and is connected to the upstream end of the filling device (36), which channel extends at least in portions from the upstream end of the filling device (36) toward the seal (56), when viewed in the longitudinal direction of the housing (10).

2. Mixing and kneading machine (100) according to claim 1, **characterized in that** the at least two cavities (54, 54') are separated from one another in such a way that, when viewed in the longitudinal direction of the housing (10), at least one of the at least two cavities (54, 54') of the filling device (36) is arranged so as to be offset in the upstream direction, or at least partially offset in the upstream direction, with respect to at least one other of the at least two cavities (54, 54').

3. Mixing and kneading machine (100) according to either claim 1 or claim 2, **characterized in that** the filling device (36) has the shape of a cuboid, a wedge, a truncated wedge, an inverted wedge or an inverted truncated wedge, which extends through the recess (42) or is connected to the recess (42).

4. Mixing and kneading machine (100) according to any of the preceding claims, **characterized in that** the sides of the filling device (36) are closed by walls (44, 44', 44", 44"'), the lower end of the filling device (36) is open and the upper end of the filling device (36) is open or is provided with a cover (48) provided with two or more open nozzles.

5. Mixing and kneading machine (100) according to any of the preceding claims, **characterized in that** the at least one partition wall (52, 52') extends over at least 50%, preferably over at least 80%, particularly preferably over at least 90%, and most preferably over the entire height of the filling device (36), the at least one partition wall (52, 52') extending upward from the lower edge of the filling device (36) or from 0.1 to 10 mm, preferably from 0.3 to 5 mm and particularly preferably from 0.5 to 2 mm above the outermost boundary of the screw shaft.

6. Mixing and kneading machine (100) according to any of the preceding claims, **characterized in that** the filling device (36) has the shape of a cuboid or an inverted truncated wedge which extends through the recess (42) or is connected to the recess (42), a partition wall (52, 52') extending at least substantially in parallel with the cross-sectional area of the housing (10) over at least 50%, preferably over at least 80%, particularly preferably over at least 90% and most preferably over the entire height of the filling device (36) and over at least 50%, preferably over at least 80%, particularly preferably over at least 90% and most preferably over the entire width of the filling device (36).

7. Mixing and kneading machine (100) according to any of claims 1 to 5, **characterized in that** the filling device (36) comprises two partition walls (52, 52'), one partition wall (52) of which extends at least substantially in parallel with the cross-sectional area of the housing (10), and the other partition wall (52') of which extends at least substantially in parallel with the longitudinal surface of the housing (10), the two partition walls (52, 52') being connected to one another such that, when viewed in the cross section of the filling device (36), two completely separate cavities (54, 54') are provided.

8. Mixing and kneading machine (100) according to any of the preceding claims, **characterized in that** a stuffing box (56) which seals the screw shaft (12) with respect to the inner peripheral surface of the housing (10) is provided i) between the gear flange (38) and the upstream end of the housing (10) connected thereto and/or ii) in the upstream end of the housing (10).

9. Mixing and kneading machine (100) according to any of claims 1 to 8, **characterized in that** the at least one discharge channel (58) extends from the upstream end of the filling device (36) over at least 20%, preferably at least 40%, more preferably at least 60%, even more preferably at least 80%, particularly preferably at least 90% and most preferably over the entire length up to the seal (56).

10. Mixing and kneading machine (100) according to any of claims 1 to 9, **characterized in that**, when viewed from the inner peripheral surface of the housing (10), the at least one discharge channel (58) extends into the housing wall (40) by 1 to 50%, preferably by 2 to 20% and particularly preferably by 2 to 10%.

11. Mixing and kneading machine (100) according to any of claims 8 to 10, **characterized in that** the at least one discharge channel (58) has an oval, round, rectangular or square, preferably rectangular or square, cross section.

12. Mixing and kneading machine (100) according to any of claims 8 to 11, **characterized in that** the width of the at least one discharge channel (58) is 0.005 to 0.5 Da, preferably 0.02 to 0.3 Da, particularly preferably 0.05 to 0.2 Da and very particularly preferably 0.08 to 0.12 Da, where Da is the diameter of the hollow interior and, if the hollow interior is not cylindrical, the greatest distance from one point on the inner peripheral surface to a perpendicularly opposite point on the inner peripheral surface of the housing, as described in the description.

13. Mixing and kneading machine (100) according to any of claims 8 to 12, **characterized in that** at least one metal ring (62) or plastics ring is provided in the stuffing box (56) between the packing cords, at least one connection channel (60) being provided in the longitudinal portion of the housing (10) that radially surrounds the stuffing box (56), via which channel a gas can flow from the upstream region of the housing (10) into the interior (18) of the housing (10).

14. Method for mixing and kneading a starting material, **characterized in that** it is carried out in a mixing and kneading machine (100) according to any of the preceding claims, the drive being switched on and starting material to be mixed and kneaded is fed to the filling device (36) selectively via only one of the at least two cavities (54, 54').

15. Method according to claim 14, **characterized in that** a gas is introduced into the housing (10) at a pressure which is 500 Pa to 10 MPa, preferably 10 KPa to 0.3 MPa, higher than the pressure present in the interior (18) of the housing (10).

## Revendications

1. Mélangeur-malaxeur (100) pour des processus de préparation en continu, tels que le malaxage et le mélange de matières premières particulaires et/ou destiné à la fabrication de granulés, de profilés extrudés ou de pièces moulées, comportant un boîtier (10) dans lequel un espace intérieur (18) creux délimité par la surface périphérique intérieure du boîtier (10) et s'étendant dans la direction longitudinale du mélangeur-malaxeur (100) est formé, comportant un arbre à vis sans fin (12) s'étendant au moins par sections dans la direction axiale à travers l'espace intérieur (18) du boîtier (10), ledit arbre à vis sans fin, pendant le fonctionnement, tournant dans l'espace intérieur (18) du boîtier (10) et en même temps se déplace en translation d'avant en arrière dans la direction axiale, comportant un entraînement, lequel fait tourner l'arbre à vis sans fin (12) pendant le fonctionnement, et comportant un dispositif de remplissage (36) disposé sur le boîtier (10) et destiné à fournir au moins une matière de départ à mélanger et à malaxer dans l'espace intérieur (18) du boîtier (10), dans lequel le dispositif de remplissage (36) s'étende à travers un évidement (42) s'étendant à travers la paroi de boîtier (40) ou est relié à un évidement (42) s'étendant à travers la paroi de boîtier (40),
**caractérisé en ce**
**que** le dispositif de remplissage (36) comprend au moins deux cavités (54, 54') s'étendant respectivement sur la hauteur du dispositif de remplissage (36), lesdites cavités étant séparées l'une de l'autre par au moins une paroi de séparation (52, 52'), et qu'un joint d'étanchéité (56) assurant l'étanchéité de l'arbre à vis sans fin (12) contre la surface périphérique intérieure du boîtier (10) est situé i) entre une bride d'engrenage (38) et une extrémité amont du boîtier reliée à celle-ci (10) et/ou ii) dans l'extrémité amont du boîtier (10),
et au moins un
canal de décharge (58) s'étendant depuis la surface circonférentielle intérieure du boîtier (10) par sections dans le boîtier (10) et relié à l'extrémité amont du dispositif de remplissage (36) est situé dans le boîtier (10),
lequel s'étend au moins par sections dans la direction du joint d'étanchéité (56) depuis l'extrémité amont du dispositif de remplissage (36), vu dans la direction longitudinale du boîtier (10).

2. Mélangeur-malaxeur (100) selon la revendication 1, **caractérisé en ce que** les au moins deux cavités (54, 54') sont séparées l'une de l'autre de telle sorte que l'au moins une des au moins deux cavités (54, 54') du dispositif de remplissage (36), vu dans la direction longitudinale du boîtier (10), est disposée décalée en amont ou au moins partiellement décalée en amont par rapport à l'au moins une autre des au moins deux cavités (54, 54').

3. Mélangeur-malaxeur (100) selon la revendication 1 ou 2, **caractérisé en ce que** le dispositif de remplissage (36) présente la forme d'un parallélépipède, d'un coin, d'un coin tronqué, d'un coin inversé ou d'un coin tronqué inversé, lequel s'étend à travers l'évidement (42) ou est relié à l'évidement (42).

4. Mélangeur-malaxeur (100) selon l'une quelconque des revendications précédentes, **caractérisé en ce que** les côtés du dispositif de remplissage (36) sont fermés par des parois (44, 44', 44", 44'"), l'extrémité inférieure du dispositif de remplissage (36) est ouverte et l'extrémité supérieure du dispositif de remplissage (36) est ouverte ou est munie d'un couvercle (48) pourvu d'au moins deux buses ouvertes.

5. Mélangeur-malaxeur (100) selon l'une quelconque des revendications précédentes, **caractérisé en ce que** l'au moins une paroi de séparation (52, 52') s'étend sur au moins 50 %, de préférence sur au moins 80 %, de manière particulièrement préférée sur au moins 90 % et idéalement sur toute la hauteur du dispositif de remplissage (36), dans lequel l'au moins une paroi de séparation (52, 52') s'étende vers le haut depuis le bord inférieur du dispositif de remplissage (36) à ou de 0,1 à 10 mm, de préférence de 0,3 à 5 mm et de manière particulièrement préférée de 0,5 à 2 mm au-dessus de la limite la plus externe de l'arbre à vis sans fin.

6. Mélangeur-malaxeur (100) selon l'une quelconque des revendications précédentes, **caractérisé en ce que** le dispositif de remplissage (36) présente la forme d'un parallélépipède ou d'un coin tronqué inversé qui s'étend à travers l'évidement (42) ou est relié à l'évidement (42), dans lequel une paroi de séparation (52, 52') s'étende au moins sensiblement parallèlement à la section transversale du boîtier (10) sur au moins 50 %, de préférence sur au moins 80 %, de manière particulièrement préférée sur au moins 90 % et idéalement sur toute la hauteur du dispositif de remplissage (36), ainsi que sur au moins 50 %, de préférence sur au moins 80 %, de manière particulièrement préférée sur au moins 90 % et idéalement sur toute la largeur du dispositif de remplissage (36).

7. Mélangeur-malaxeur (100) selon l'une quelconque des revendications 1 à 5, **caractérisé en ce que** le dispositif de remplissage (36) comprend deux parois de séparation (52, 52'), dont l'une (52) s'étend au moins sensiblement parallèlement à la section transversale du boîtier (10) et l'autre (52') s'étend au moins sensiblement parallèlement à la surface longitudinale du boîtier (10), dans lequel les deux parois de séparation (52, 52') sont reliées l'une à l'autre de telle sorte que, vu dans la section transversale du dispositif de remplissage (36), deux cavités (54, 54') complètement séparées l'une de l'autre sont situées.

8. Mélangeur-malaxeur (100) selon l'une quelconque des revendications précédentes, **caractérisé en ce qu'**un presse-étoupe (56) assurant l'étanchéité de l'arbre à vis sans fin (12) par rapport à la surface circonférentielle intérieure du boîtier (10) est situé i) entre la bride d'engrenage (38) et l'extrémité amont du boîtier (10) reliée à celle-ci et/ou ii) dans l'extrémité amont du boîtier (10).

9. Mélangeur-malaxeur (100) selon l'une quelconque des revendications 1 à 8, **caractérisé en ce que** l'au moins un canal de décharge (58) s'étend depuis l'extrémité amont du dispositif de remplissage (36) sur au moins 20 %, de préférence au moins 40 %, plus préférablement au moins 60 %, encore plus préférablement au moins 80 %, de manière particulièrement préférée au moins 90 % et idéalement sur toute la longueur jusqu'au joint d'étanchéité (56).

10. Mélangeur-malaxeur (100) selon l'une quelconque des revendications 1 à 9, **caractérisé en ce que** l'au moins un canal de décharge (58), vu depuis la surface circonférentielle intérieure du boîtier (10), s'étend de 1 à 50 %, de préférence de 2 à 20 % et de manière particulièrement préférée de 2 à 10 % dans la paroi de boîtier (40).

11. Mélangeur-malaxeur (100) selon l'une quelconque des revendications 8 à 10, **caractérisé en ce que** l'au moins un canal de décharge (58) comporte une section transversale ovale, ronde, rectangulaire ou carrée et de préférence rectangulaire ou carrée.

12. Mélangeur-malaxeur (100) selon l'une quelconque des revendications 8 à 11, **caractérisé en ce que** la largeur de l'au moins un canal de décharge (58) est de 0,005 à 0,5 Da, de préférence de 0,02 à 0,3 Da, de manière particulièrement préférée de 0,05 à 0,2 Da et idéalement de 0,08 à 0,12 Da, dans lequel Da est le diamètre de l'espace intérieur creux et, si l'espace intérieur creux n'est pas cylindrique, la plus grande distance d'un point sur la surface circonférentielle intérieure à un point perpendiculairement opposé étant la surface circonférentielle intérieure du boîtier telle que décrite dans la description.

13. Mélangeur-malaxeur (100) selon l'une quelconque des revendications 8 à 12, **caractérisé en ce qu'**au moins un anneau métallique (62) ou un anneau en matière plastique est situé dans le presse-étoupe (56) entre les tresses de garniture, dans lequel au moins un canal de liaison (60) étant situé dans la section longitudinale du boîtier (10) entourant radialement le presse-étoupe (56), au moyen dudit canal de liaison un gaz pouvant s'écouler de la zone amont du boîtier (10) jusque dans l'espace intérieur (18) du boîtier (10).

14. Procédé de mélange et de malaxage d'une matière de départ, **caractérisé en ce qu'**il fonctionne dans un mélangeur-malaxeur (100) selon l'une quelconque des revendications précédentes, dans lequel l'entraînement est mis en marche et la matière de départ à mélanger et à malaxer est fournie sélectivement au moyen d'une seule des au moins deux cavités (54, 54') du dispositif de remplissage (36).

15. Procédé selon la revendication 14, **caractérisée en ce qu'**un gaz est introduit dans le boîtier (10) à une pression, laquelle est de 500 Pa à 10 MPa et de préférence de 10 KPa à 0,3 MPa supérieure à la pression appliquée dans l'espace intérieur (18) du boîtier (10).
